# FASCICULE DE BREVET EUROPEEN

(11) **EP 0 935 419 B1**
(45) Date de publication et mention de la délivrance du brevet: **29.08.2001**
(21) Numéro de dépôt: 97943951.0
(22) Date de dépôt: 06.10.1997
(51) Int. Cl.: A22C 7/00, A47J 27/20

(54) **UNITE DE MOULAGE ET DE TRAITEMENT THERMIQUE DE PRODUITS ALIMENTAIRES DE FORME ALLONGEE**
EINHEIT ZUR FORMUNG UND WÄRMEBEHANDLUNG VON LANGGESTRECKTEN NAHRUNGSPRODUKTEN
UNIT FOR MOULDING AND HOT TREATMENT OF ELONGATED FOOD PRODUCTS

(30) Priorité: 17.10.1996 FR 9612857
(43) Date de publication de la demande: 18.08.1999
(73) Titulaire: KAUFLER S.A., F-22600 Loudeac (FR)
(72) Inventeur: CHAMPALAUNE, Jean-Claude, F-35290 Saint-Méen-le-Grand (FR); CORVELER, Yvon, F-56300 Pontivy (FR)
(74) Mandataire: Le Faou, Daniel
(86) Numéro de dépôt international: FR9701776
(87) Numéro de publication internationale: WO9817118

(56) Documents cités:
- DE-A- 3 315 311
- DE-U- 29 605 833
- FR-A- 945 531
- FR-A- 1 165 102
- FR-A- 2 456 487
- FR-A- 2 731 894
- FR-A- 2 745 984

## Description

La présente invention se rapporte à une unité de moulage et de traitement thermique de produits alimentaires, et plus particulièrement de produits alimentaires de forme allongée tels que des saucissons, des rouleaux de mortadelle, des barres de jambon ou de surimi, par exemple.

Elle concerne également une installation composée de plusieurs unités de moulage de ce type.

On a déjà proposé des unités de moulage de produits alimentaires, en particulier pour la cuisson de jambons.

De manière typique, une unité de ce genre comprend un ensemble de moules en forme de goulottes disposées horizontalement, côte-à-côte et parallèlement les unes aux autres, leur fond étant dirigé vers le bas et leur ouverture vers le haut. Cet ensemble de moules est fixé à des moyens de support qui autorisent l'empilage de plusieurs unités les unes sur les autres.

Le document FR-A-2 672 270, au nom de la demanderesse, se rapporte à une unité de ce genre.

Dans certaines formes de réalisation, chaque goulotte est solidaire d'une plaque formant double fond, qui s'étend sous son fond. Les plaques double-fonds jouent le rôle d'éléments de couvercle aptes à venir s'engager dans les ouvertures de goulotte d'une unité sous-jacente dans un empilage.

L'utilisation de couvercles est utile notamment pour la cuisson de jambons, car la viande se trouve ainsi confinée à l'intérieur d'un volume bien défini dans lequel elle est maintenue sous une certaine pression qui va éliminer les manques de matière et déterminer sa forme définitive.

Pour procéder au traitement thermique des produits alimentaires, en l'occurrence à la cuisson des jambons, on utilise principalement jusqu'ici deux techniques.

La première fait usage de chambres, cellules ou tunnels de cuisson. Il s'agit d'enceintes de dimensions adaptées pour recevoir au moins un "chariot", ce terme désignant, dans le domaine d'activité concerné, un ensemble de plusieurs unités de moulage empilées et déplaçables sur une voie de roulement. Généralement, l'enceinte est dimensionnée pour contenir de deux à douze chariots.

Pour procéder à la cuisson de jambons, on utilise généralement de la vapeur d'eau, qui est diffusée dans l'enceinte.

Une telle installation, qui suppose une bonne isolation thermique de l'enceinte, et met en oeuvre des ventilateurs pour le brassage de la vapeur servant à la cuisson, est coûteuse en prix de revient, et en entretien.

De plus, il se pose un problème lié au contact entre le fluide caloporteur - en l'occurrence la vapeur d'eau - et les produits à traiter, ce qui constitue un risque de contamination microbienne des produits.

La seconde technique utilise des cuves ou marmites de cuisson de forme généralement parallélépipèdique et munies d'un couvercle. La cuisson se fait par de l'eau chaude. Celle-ci est chauffée soit à l'aide d'un dispositif annexe tel qu'une chaudière, soit dans la cuve elle-même, par échange thermique ou par injection de vapeur.

De telles cuves sont d'un usage peu commode car il est nécessaire d'y charger les unités de cuisson par le haut, par exemple en utilisant un palan ou un pont roulant.

De plus, le problème de contamination se rencontre également avec ce procédé.

Dans sa demande de brevet français N° 96 03556 du 18 mars 1996, non encore publiée au moment du dépôt de la présente demande de brevet, la demanderesse a proposé une solution pour remédier aux inconvénients précités.

Pour cela, un premier objectif de l'invention qui fait l'objet de cette demande antérieure était de fournir une unité de moulage de produits alimentaires qui soit pourvue elle-même de moyens aptes à réaliser le traitement thermique des produits. Ce faisant, on diminue sensiblement le prix de revient de l'opération.

Un deuxième objectif était de pouvoir réaliser ce traitement sans qu'il y ait contact entre le fluide caloporteur et les produits alimentaires, de manière à éliminer pratiquement tout risque de contamination.

Ladite invention visait également à atteindre ces objectifs à l'aide de moyens simples, peu coûteux et faciles à utiliser.

Pour ce faire, la demanderesse a mis à profit l'espace "mort", c'est-à-dire non utilisé, qui est situé, dans les unités connues, entre le fond d'une goulotte et l'élément de couvercle (double-fond) disposé sous ce fond.

L'unité de moulage et de traitement thermique qui fait l'objet de la demande de brevet N° 96 03556 comprend, de manière connue, un ensemble de moules en forme de goulottes disposées horizontalement, côte-à-côte et parallèlement les unes aux autres, leur fond étant dirigé vers le bas et leur ouverture vers le haut, et à chaque goulotte est associé un élément de couvercle qui s'étend en-dessous de son fond, cet ensemble de moules étant fixé à des moyens de support qui autorisent l'empilage des unités, les éléments de couvercle venant alors s'engager dans les ouvertures de goulotte d'une unité sous-jacente.

De plus, aussi bien les goulottes que les éléments de couvercle sont réalisés dans un matériau thermiquement bon conducteur.

La caractéristique nouvelle et remarquable de l'unité revendiquée dans cette demande de brevet antérieure consiste dans le fait que chaque goulotte est fixée à l'élément de couvercle associé de manière à délimiter un conduit étanche - dit élémentaire - apte à recevoir un fluide caloporteur pour le traitement, par échange thermique, des produits alimentaires contenus dans lesdites goulottes.

Il est ainsi ménagé autour de chaque goulotte un espace étanche où on fait circuler un fluide caloporteur tel que de l'eau, de l'huile ou de la vapeur, par exemple.

Ainsi le traitement thermique, par exemple la cuisson des produits, se fait de manière efficace et homogène car une grande partie, voire la totalité des produits est entourée par le fluide caloporteur.

Dans un mode de réalisation préféré, chacun de ces conduits élémentaires s'étend non seulement sous la goulotte associée, mais aussi le long de ses flancs latéraux, de sorte que c'est l'intégralité de la paroi de la goulotte (toute la périphérie de la section) qui est exposée à l'échange thermique avec le fluide caloporteur.

Chaque conduit élémentaire entoure ainsi complètement - ou à peu près complètement - la paroi de la goulotte correspondante.

Comme, par ailleurs, le couvercle de l'unité supérieure, qui constitue une portion de la paroi du conduit de cette unité, s'engage dans l'ouverture de la goulotte, c'est l'ensemble du produit contenu dans celle-ci qui est cerné par le fluide caloporteur.

Ce genre d'unité est parfaitement adapté au traitement de produits allongés ayant une section rectangulaire, approximativement semi-cylindrique ou semi-ovale, la goulotte étant en contact avec la portion de la paroi galbée du produit, tandis que le couvercle s'applique contre sa portion plane, ou faiblement incurvée.

Il n'est pas parfaitement adapté, en revanche, pour le traitement de produits allongés dont la section a une forme courbe, symétrique par rapport à un plan longitudinal médian, notamment des produits de section circulaire ou ovale.

En effet, le couvercle devant pénétrer dans la goulotte, et ayant des bords d'une certaine épaisseur, il s'ensuit qu'une empreinte indésirable peut se former autour du produit. Il est donc difficile d'obtenir des formes symétriques.

C'est pourquoi la présente invention a pour objectif de proposer une unité du même type général que celle de la demande de brevet sus-mentionnée, mais qui convienne à ces formes de section.

Plus précisément, la présente invention a été conçue pour la cuisson de produits de charcuterie de forme générale cylindrique, tels que des saucissons ou des mortadelles.

Cette application n'est pas limitative, bien entendu, de l'objet de l'invention.

Pour fabriquer ce genre de produits, les viandes préalablement broyées, parfois émulsionnées, et assaisonnées sont introduites dans un boyau au moyen d'une machine appropriée, appelée "poussoir".

Le boyau est pincé et fermé à intervalles déterminés par des clips, de manière à constituer des tronçons de longueur bien définie, pouvant aller d'une dizaine de centimètres à un mètre ou plus, ceci au moyen d'une machine appelée "clippeuse".

Les produits ainsi obtenus sont de forme cylindrique.

En vue de la cuisson, les produits sont suspendus à la verticale à une barre qui est placée horizontalement dans un châssis généralement monté sur roues, et communément appelé "chariot de cuisson".

Les chariots garnis de produits crus sont ensuite introduits dans une enceinte de cuisson. La cuisson s'opère par adjonction de vapeur d'eau détendue à l'intérieur de l'enceinte, voire par chaleur sèche.

Ce système traditionnel présente l'inconvénient de manutentions difficiles, à savoir l'accrochage des produits sur les barres et le placement des barres sur les chariots.

Cet inconvénient est d'autant plus important que les produits sont longs, leur poids augmentant de ce fait en proportion.

Or, les produits destinés à être tranchés industriellement et emballés chez le producteur sont préférablement fabriqués en grande longueur, pour des questions de rentabilité.

De plus, le mode de placement oblige à laisser des espaces relativement importants entre les barres, espaces eux-mêmes nécessaires à la circulation de l'air éventuellement saturé de vapeur. Il en résulte un coefficient de chargement rapporté au mètre carré de sol qui est relativement faible.

Enfin, les boyaux étant assez souples, il se produit toujours une tendance à accumulation du produit vers le bas, par suite de la gravité. De ce fait, les produits obtenus n'ont pas une section parfaitement constante sur toute leur longueur, ce qui est particulièrement préjudiciable si on souhaite le découper ensuite en tranches de poids constant.

La présente invention a pour objectif principal d'éliminer les inconvénients qui viennent d'être énoncés en proposant un dispositif de traitement thermique dans lequel les produits allongés peuvent être placés horizontalement côte-à-côte dans des goulottes d'une unité multi-goulottes, les différentes unités garnies de produits étant empilées en vue du traitement, d'une manière similaire à celle utilisée pour la cuisson des jambons, par exemple par des dispositifs tels que décrits dans le FR-A-2 672 270 cité plus haut.

Un autre objectif de la présente invention est de proposer un système de traitement thermique au moyen d'un fluide caloporteur qui n'est pas en contact avec les produits, ceci en mettant en oeuvre une technique similaire à celle qui est décrite dans la demande antérieure 96 03556 également citée plus haut.

L'unité de moulage et de traitement thermique de produits alimentaires de forme allongée, qui fait l'objet de la présente invention, comprend, de manière connue, un ensemble de goulottes parallèles aptes à recevoir les produits à traiter.

Cette unité est remarquable par le fait qu'elle consiste en un caisson plat, étanche, à paroi thermiquement conductrice, à l'intérieur duquel il est possible de faire circuler un fluide caloporteur, ce caisson possédant deux grands faces horizontales dans chacune desquelles est creusée une série de goulottes conformées et disposées de telle manière que, lorsque deux unités sont superposées, les goulottes de la face inférieure de l'une viennent en correspondance avec les goulottes de la face supérieure de l'autre, pour constituer des canaux à contour fermé dans lesquels peut s'opérer le traitement des produits.

Par ailleurs, selon un certain nombre de caractéristiques additionnelles non limitatives de l'invention:
- la largeur des goulottes est maximale au niveau de leur embouchure ;
- les sections de l'ensemble des goulottes sont identiques ;
- les goulottes ont une section sensiblement semi-circulaire ou semi-elliptique ;
- les goulottes de la face supérieure sont décalées par rapport aux goulottes de la face inférieure, selon une disposition en quinconce ;
- l'intérieur du caisson est cloisonné par des éléments de paroi qui assurent une trajectoire en chicane du fluide caloporteur ;
- les goulottes sont obturées à leurs extrémités ;
- les moyens d'obturation des extrémités des goulottes sont des éléments de plaque qui présentent une échancrure centrale ;
- l'unité comporte des moyens de centrage et de maintien aptes à coopérer avec des moyens complémentaires d'une unité sous-jacente au moment de l'empilage ;
- l'unité comporte des organes de connexion fluidique aptes à coopérer avec des organes complémentaires d'une unité sous-jacente au moment de l'empilage afin d'assurer automatiquement, et de manière étanche, la mise en communication des deux caissons superposés.

L'invention a également pour objet une installation de moulage et de traitement thermique de produits alimentaires, notamment pour la cuisson de produits de charcuterie du genre saucissons ou mortadelles, cette installation étant remarquable en ce qu'elle comporte plusieurs unités telles que décrites ci-dessus, qui sont empilées, l'installation étant équipée d'une source d'alimentation en fluide caloporteur et de moyens d'évacuation de ce fluide, sur lesquels chaque unité est branchée.

Dans un mode de réalisation possible, ledit fluide consiste en un liquide chaud permettant de cuire les produits alimentaires contenus dans les goulottes.

Dans un autre mode de réalisation possible, le fluide consiste en un liquide froid permettant de refroidir (par exemple après cuisson) ou de congeler lesdits produits alimentaires.

D'autres caractéristiques et avantages de l'invention apparaîtront de la description et des dessins annexés qui en représentent, à simple titre d'exemple non limitatifs, des modes de réalisation possibles.

Sur les dessins :
- la figure 1 est une vue en coupe transversale d'une unité conforme à l'invention, le plan de coupe étant désigné I-I sur la figure 2 ;
- la figure 2 est une vue de dessus, partiellement en coupe, de la même unité vue selon le plan II-II de la figure 1 ;
- la figure 3 est une vue de détail en perspective éclatée, avec arrachement partiel de certaines parties, cette vue étant destinée à comprendre comment un produit, en l'occurrence un saucisson, se trouve confiné entre les goulottes en regard, de deux unités superposées ;
- la figure 4 est une vue schématique, dans un plan transversal, montrant un empilage d'unité en cours de formation ;
- la figure 5 est une vue schématique, également dans un plan transversal, montrant une variante de l'unité de la figure 1 ;
- la figure 6 représente, toujours schématiquement, une installation composée d'un empilement d'unités conformes à celle de la figure 5 ;
- les figures 7, 8, 9 et 10 représentent différents profils de goulottes, chaque vue montrant une paire de goulottes en regard, de deux unités voisines, avant leur jonction ;
- les figures 7A et 10A illustrent deux sections possibles de produits qui ont été moulés respectivement par les goulottes des figures 7 et 10.

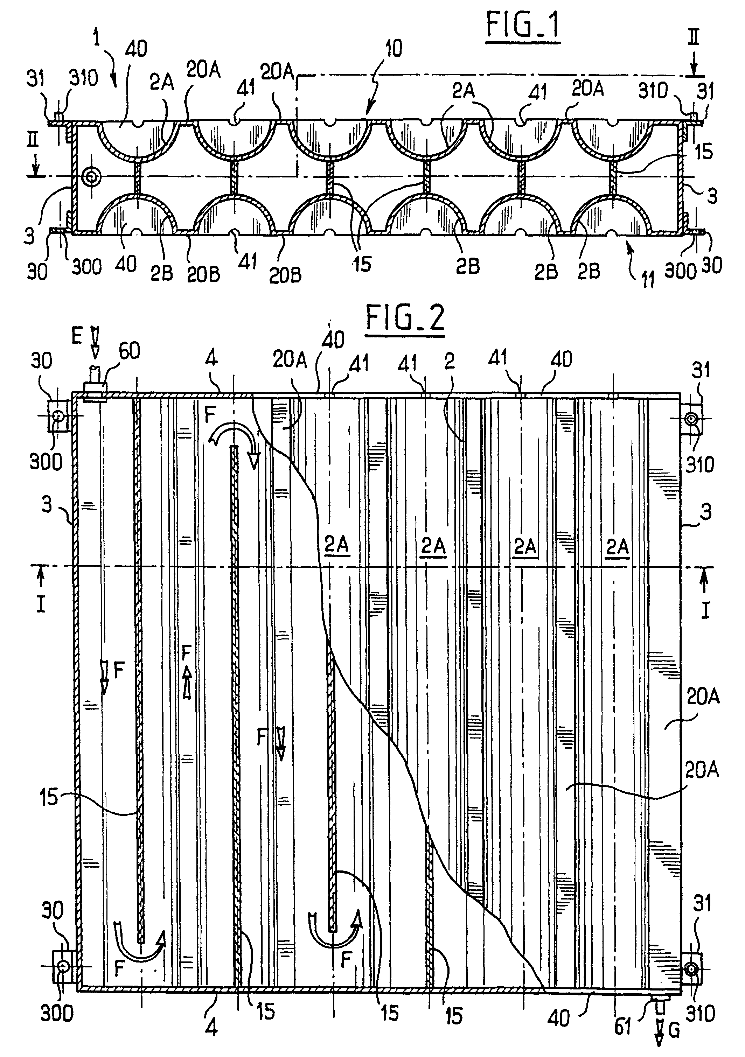

L'unité 1 illustrée sur les figures 1 et 2 a la forme générale d'un parallélépipède rectangle, de forme relativement plate, c'est-à-dire de hauteur sensiblement plus petite que sa longueur et sa largeur.

On a désigné par les références 10 et 11 les deux grandes faces opposées du caisson, par la référence 3 ses parois longitudinales et par la référence 4 ses parois d'extrémité transversales.

Ces éléments sont réalisés dans un matériau thermiquement bon conducteur, et ayant une résistance mécanique importante ; ils sont par exemple en tôle d'acier inoxydable, l'assemblage des différents éléments les uns aux autres étant réalisés par soudage.

Les grandes faces 10 et 11 sont conformées, par exemple par emboutissage, pour présenter une série de goulottes longitudinales parallèles, régulièrement espacées.

Dans le mode de réalisation des figures 1 et 2, il est prévu six goulottes, désignées 2, sur chacune des faces 10 et 11.

Les plages séparant les goulottes forment des bandes longitudinales planes, qui sont désignées par la référence 20.

Sur les figures, on a affecté les goulottes et les espaces inter-goulottes de l'une des faces, en l'occurrence la face supérieure 10, de l'indice A, tandis que les éléments similaires de la face inférieure 11 ont été affectées de l'indice B.

Dans le mode de réalisation illustré, chaque goulotte 20A se trouve à l'aplomb d'une goulotte 20B, l'unité présentant par conséquent une forme générale symétrique par rapport à un plan horizontal médian.

Les fonds de deux goulottes en regard sont reliés par des cloisons 15 qui ont une longueur inférieure à la longueur des goulottes, de manière à laisser une communication entre deux espaces voisins situés entre les goulottes, dans une zone d'extrémité de celles-ci.

L'extrémité interrompue de l'élément 15 est inversée d'un élément à l'autre de manière à former un chemin en chicane pour la circulation du fluide caloporteur à l'intérieur du caisson.

Sur la figure 2 on a désigné par les références 60 et 61 des embouts de connexion permettant le branchement de l'unité à des conduits d'amenée et d'évacuation, respectivement, du fluide caloporteur.

Les embouts 60 et 61 sont par exemple diagonalement opposés.

On comprend que la trajectoire en chicane du fluide caloporteur favorise l'homogénéité de l'échange thermique avec l'ensemble des goulottes 2A, 2B lorsque le fluide traverse le caisson de l'entrée 60 à la sortie 61.

Les cloisons 15 jouent également un rôle intéressant sur le plan mécanique, assurant la fonction d'entretoise entre une paire de goulottes 2A, 2B, et contribuant ainsi à la rigidité de l'ensemble.

Les plaques transversales 4 obturent les deux extrémités du caisson, lequel constitue par conséquent une enceinte étanche pour la circulation du fluide caloporteur.

Les parties des plaques 4 qui se trouvent en regard des goulottes 2, référencées 40 obturent les extrémités de ces goulottes, ce qui permet d'y confiner les produits à traiter.

Dans le mode de réalisation illustré, qui concerne le moulage et la cuisson de saucissons, le bord de chaque partie 40, qui s'inscrit dans le plan des faces 10 ou 11, et s'étend diamétralement par rapport à la section des goulottes, est échancré dans sa partie centrale par une encoche semi-circulaire 41.

Comme on le verra plus loin, le rôle des échancrures 41 est de recevoir les clips de fermeture des saucissons lorsque ceux-ci sont mis en place dans les goulottes.

L'unité 1 est pourvue de moyens de centrage et de maintien destinés à coopérer avec des moyens analogues prévus sur les unités sous-jacente et sus-jacente lorsqu'une pile d'unité est formée, afin d'assurer la bonne cohésion de l'empilement.

Dans le mode de réalisation illustré, ces moyens consistent en des petites pièces en équerre, en forme de "L", qui sont fixées, par exemple par soudage, à chaque angle des faces latérales longitudinales 3.

Les pièces fixées en partie inférieure, référencées 30, présentent un trou 300 percé dans leur aile horizontale.

Les pièces supérieures, référencées 31, ont une aile horizontale munie d'un petit téton tronconique 310 dirigé vers le haut, positionné et conformé de manière à pouvoir s'engager dans le trou 300 des pièces 30 d'une unité sus-jacente, lorsque cette dernière est placée sur l'unité concernée, au moment de la formation d'une pile.

La coopération des tétons 310 avec les trous 300 de l'unité voisine assure le bon centrage et l'immobilisation en direction horizontale des différentes unités les unes par rapport aux autres dans un même empilement.

La forme de la section et les dimensions (diamètre et longueur) des goulottes 2 sont bien évidemment choisies pour s'adapter à la forme et aux dimensions des produits allongés qu'on souhaite traiter.

S'agissant de saucisson, à titre indicatif, le diamètre des goulottes est compris entre 40 et 100 mm.

Leur longueur est comprise entre 200 et 1 500 mm.

Le nombre de goulottes sera également, bien sûr, adapté aux dimensions adoptées. A titre indicatif, il est compris entre cinq et vingt.

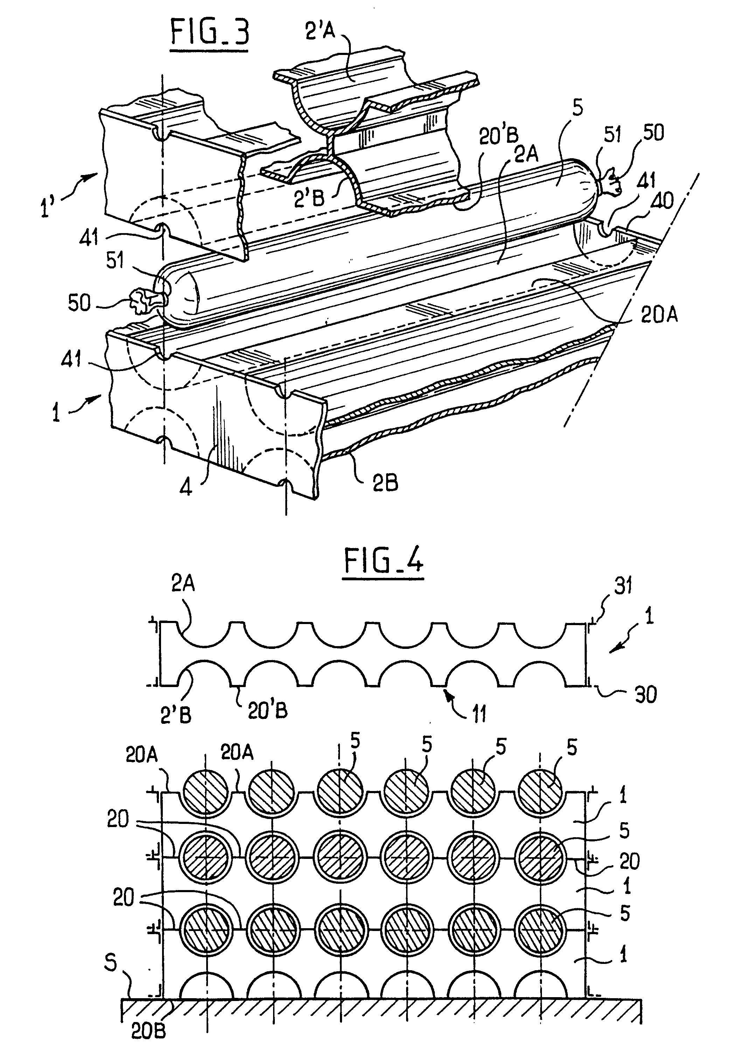

La figure 3 représente un saucisson 5 qui doit être cuit à l'intérieur d'un conduit, ou canal, constitué par les goulottes en regard 2A, 2'B de deux unités superposées, à savoir une unité inférieure 1 et une unité supérieure 1'.

Le saucisson 5 a une forme cylindrique dont le diamètre et la longueur correspondent sensiblement à ceux des goulottes. Les deux extrémités du saucisson sont pincées et fermées par des clips 51, au-delà desquels se prolongent les portions d'extrémité torsadées 50 du boyau.

Au cours de la mise en place des saucissons dans l'unité 1, les clips 51 viennent se positionner dans les échancrures 41, tandis que les portions 50 dépassent à l'extérieur des flasques 4. Lorsque l'unité sus-jacente 1' est placée sur l'unité 1, les plages planes 20'B et 20A viennent en appui l'une sur l'autre, formant les plans de joint du moule multiple formé par les deux unités 1, 1', entre lesquels les saucissons se trouvent confinés.

La cuisson peut alors s'opérer par circulation d'un fluide chaud, par exemple d'une eau dont la température est comprise entre 65 et 95°C, pendant une période de l'ordre de 1 heure à 6 heures environ.

La figure 4 illustre la manière dont on empile différentes unités sur un support **S**. Ce support est avantageusement conformé pour autoriser une préhension par les fourches d'un engin de manutention.

Pour cela, on commence par poser un saucisson dans chacune des goulottes de la face supérieure de la première unité ; on la recouvre de l'unité suivante, dont on garnit ensuite les goulottes supérieures d'une nouvelle série de saucissons, et ainsi de suite jusqu'à la formation complète de la pile.

Le nombre d'unités constitutives de la pile peut être quelconque ; ce nombre sera naturellement dépendant des dimensions en hauteur des unités, ainsi que de la capacité d'échange thermique de la source de fluide caloporteur.

A titre indicatif les empilements seront formés d'un nombre d'unités compris entre cinq et vingt.

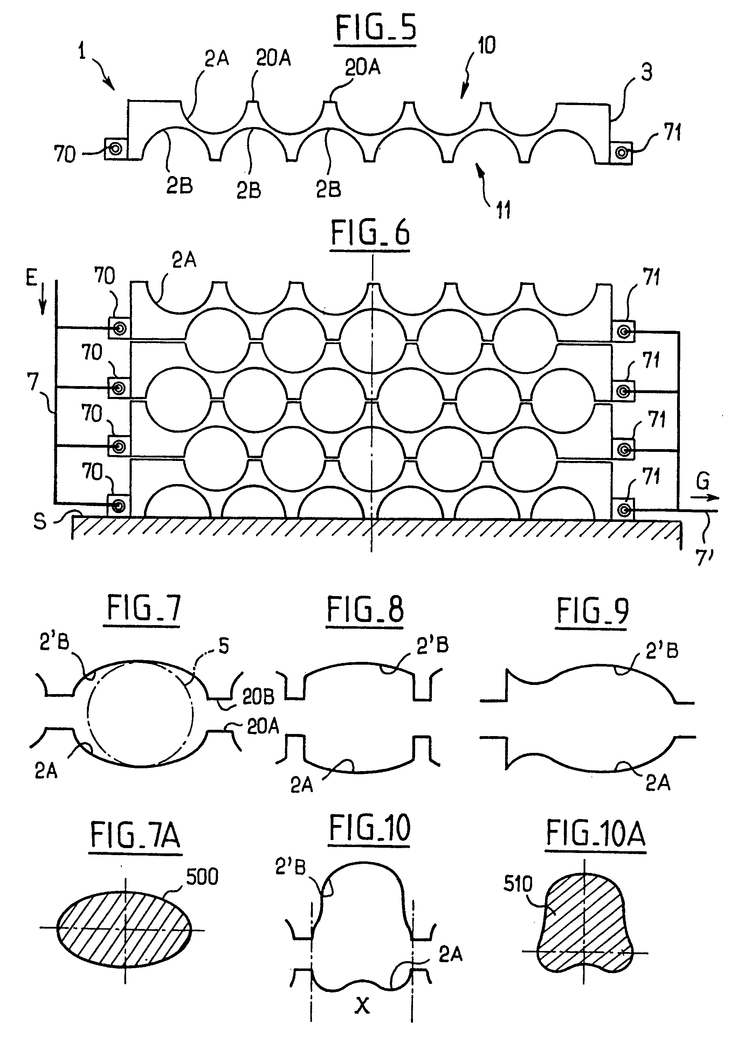

L'unité représentée à la figure 5 se distingue de celle qui vient d'être décrite essentiellement par le fait que les goulottes 2A de la face supérieure 10 sont décalées en direction transversale par rapport aux goulottes 2B de la face inférieure.

L'axe des goulottes 2B se trouvent donc sensiblement à l'aplomb des plages inter-goulottes 10A, et réciproquement.

On notera par ailleurs que dans cette variante, les embouts d'arrivée 70 et de sortie 71 du fluide caloporteur sont situés sur les flancs latéraux 3, et non sur les flasques 4, des unités.

Grâce à ce décalage relatif des goulottes supérieures et inférieures, suivant une disposition en quinconce, il est possible de réduire notablement la hauteur des unités, l'encombrement des goulottes inférieures s'imbriquant en quelque sorte géométriquement entre celui des goulottes supérieures, et réciproquement.

L'empilement de ce genre de goulottes peut être réalisé, soit à l'aide de deux modèles d'unité différents, qui sont empilés alternativement, soit en retournant une fois sur deux l'une des goulottes, par pivotement à 180° autour d'un axe horizontal transversal.

L'empilement illustré à la figure 6 est approvisionné en liquide caloporteur, par exemple en eau chaude, par un conduit d'amenée 7 (flèche E) branché en parallèle sur les embouts d'entrée 70 de chaque unité.

L'eau froide quitte l'empilement par un conduit d'évacuation 7' branché en parallèle sur les embouts de sortie 71 (flèche **G**).

Avantageusement, il peut être prévu d'opérer la cuisson des saucissons au moyen d'eau chaude, puis, une fois la cuisson terminée, de faire circuler de l'eau froide dans le caisson afin de refroidir rapidement les saucissons cuits.

On effectue alors le démoulage et le dispositif est prêt pour recevoir des nouveaux produits à cuire.

Le profil de goulotte représenté à la figure 7 présente une forme semi-elliptique, pour le moulage de produits de section ovale 500, représentée sur la figure 7A. Cette forme de goulotte peut bien entendu être utilisée pour le traitement de produits ayant déjà avant traitement une section similaire.

Cependant, elle peut également être utilisée pour la mise en forme d'un produit de section initialement différente, par exemple d'un produit 5 de section cylindrique.

Lors de l'empilage, la pression des deux goulottes 2A, 2'B sur le produit va mettre celui-ci en forme, pour lui faire prendre la forme du moule.

Bien entendu, cette possibilité n'est à envisager que si le produit 5 possède une déformabilité appropriée.

Le profil de goulotte illustré à la figure 8 est composé d'un fond arqué et de deux tronçons verticaux symétriques.

Ainsi, le produit fini a une section approximativement ovale, à pointes tronquées.

Le profil particulier des goulottes de la figure 9 est conçu pour donner au produit moulé et traité une section s'apparentant au contour d'un poisson.

Ce type de goulotte peut avantageusement être utilisé pour le traitement de produits alimentaires à base de poisson, par exemple de barres de surimi.

Le profil de goulotte illustrée à la figure 10 se distingue des précédents par le fait que les goulottes 2'B de la face inférieure ont une forme différente des goulottes 2A d'une face supérieure.

Ce profil permet de mouler un produit de forme particulière, dont la section est désignée 510 sur la figure 10A. La partie supérieure du produit a la forme générale d'un "U" renversé, tandis que la partie inférieure a la forme d'un "U" à l'endroit, de largeur sensiblement plus grande que la hauteur, et possédant une zone de fond centrale concave ainsi que des bords latéraux légèrement obliques.

Cette représentation a pour but de montrer qu'il est possible de prévoir des formes très diverses. Il importe seulement que la plus grande largeur des goulottes, référencée **X** sur la figure 10, se trouve au niveau de son embouchure dans le plan de joint 20A, respectivement 20B.

Naturellement, cette largeur maximale est la même pour les deux goulottes en regard, afin qu'il n'y ait pas de solution de continuité de la paroi du canal de chaque côté du plan de joint.

C'est ce positionnement de la plus grande largeur **X** au niveau du plan de joint qui permet le démoulage des produits après traitement.

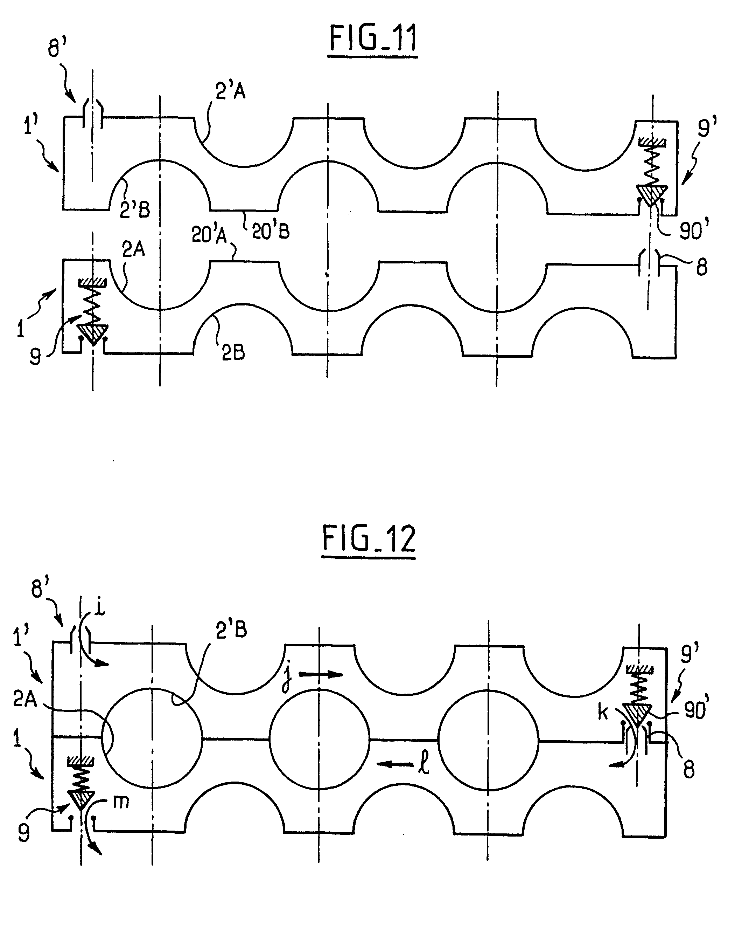

Les unités illustrées à la figure 11 sont similaires à celles des figures 5 et 6, le nombre de goulottes par face de l'unité ayant été réduit de six à trois dans un seul but de simplification.

Ce mode de réalisation des unités est remarquable par le fait que chaque unité est pourvue d'organes de connexion fluidique automatique avec l'unité sous-jacente et/ou sus-jacente.

Il s'agit de moyens de connexions de type connu, comprenant un organe mâle et un organe femelle, formant clapets anti-retour, qui lorsqu'ils sont engagés l'un dans l'autre assurent une communication entre les deux organes, permettant le passage de fluide, de manière étanche, d'une unité à l'autre.

Ces organes de connexion ont été représentés très schématiquement sur les figures.

On a désigné par les références 8, 9 les éléments mâles et, respectivement femelles, d'une unité 1. Les mêmes références, affectées d'un indice prime, ont été utilisées pour l'unité sus-jacente 1', qui vient se placer sur l'unité 1 au moment de l'empilage.

Les éléments 8 et 9 sont positionnés de manière différente sur les unités 1 et 1', de telle que manière qu'au moment de l'empilage, l'organe mâle 8 vienne s'engager dans l'organe femelle 9'. Les organes femelles 9 comprennent un clapet anti-retour 90.

Comme le montre la figure 12, lorsque l'unité 1' est convenablement placée sur l'unité 1, l'élément mâle 8 pénètre dans l'élément femelle 9', écartant de son siège le clapet 90', ce qui assure la mise en communication des deux caissons constituant les unités 1 et 1'.

Bien entendu, une communication similaire s'opère avec les unités sous-jacente et sus-jacente non représentées, si bien qu'en final on obtient une communication de l'ensemble des caissons constituant l'empilement, ce qui permet la circulation au sein de celui-ci du fluide caloporteur, circulation qui est symbolisée par les flèches **i, j, k, l** et **m.**

Des connecteurs spéciaux peuvent être prévus pour s'adapter sur les organes de connexion des unités inférieure et supérieure, et pour brancher l'ensemble aux conduits d'amenée et d'évacuation du fluide caloporteur.

On remarquera qu'avec cette configuration, la trajectoire de fluide se fait en série, successivement à travers chaque unité, et non en parallèle comme c'était le cas avec l'installation illustrée sur la figure 6.

Il convient de noter que, outre leur rôle de communication fluidique, les organes 8 et 9 assurent aussi le centrage mutuel des unités 1 et 1', ce qui évite de recourir à des moyens de centrage et d'immobilisation additionnels tels que ceux désignés 30 et 31 sur les figures 1 et 2.

Grâce à l'invention, la cuisson des produits se fait de manière efficace et homogène car la totalité ou la quasi totalité de la paroi du canal contenant chaque produit alimentaire est entourée par le fluide.

Il n'y a pas de contact entre le fluide caloporteur et les produits, ce qui réduit considérablement les risques de contamination.

Le chargement et le déchargement des produits se fait de manière relativement simple et commode pour l'opérateur.

Bien entendu, on peut se servir des unités et de l'installation conformes à l'invention pour procéder au refroidissement, voire à la congélation de produits alimentaires, en utilisant à un fluide approprié.

La présente invention peut s'appliquer à tout type de produit alimentaire de forme allongée, qui soit carné ou non.

## Revendications

1. Unité de moulage et de traitement thermique de produits alimentaires de forme allongée (5), qui comprend un ensemble de goulottes parallèles (2) aptes à recevoir les produits à traiter, **caractérisée** par le fait qu'elle consiste en un caisson plat étanche (1) à paroi thermiquement conductrice, à l'intérieur duquel il est possible de faire circuler un fluide caloporteur, ce caisson (1) possédant deux grands faces horizontales dans chacune desquelles est creusée une série de goulottes (2A, 2B) conformées et disposées de telle manière que, lorsque deux unités (1, 1') sont superposées, les goulottes (2'B) de la face inférieure de l'une viennent en correspondance avec les goulottes (2A) de la face supérieure de l'autre, pour constituer des canaux à contour fermé dans lesquels peut s'opérer le traitement des produits (5).

2. Unité selon la revendication 1, **caractérisée** par le fait que la largeur des goulottes est maximale au niveau de leur embouchure.

3. Unité selon la revendication 1 ou 2, **caractérisée** par le fait que les sections de l'ensemble des goulottes (2) sont identiques.

4. Unité selon l'une des revendications 1 à 3, **caractérisée** par le fait que les goulottes (2) ont une section sensiblement semi-circulaire ou semi-elliptique.

5. Unité selon l'une des revendications 1 à 4, **caractérisée** par le fait que les goulottes (2A) de la face supérieure sont décalées par rapport aux goulottes (2B) de la face inférieure, selon une disposition en quinconce.

6. Unité selon l'une des revendications 1 à 5, **caractérisée** par le fait que l'intérieur du caisson (1) est cloisonné par des éléments de paroi (15) qui assurent une trajectoire en chicane du fluide caloporteur.

7. Unité selon l'une des revendication 1 à 6, **caractérisée** par le fait que les goulottes (2) sont obturées à leurs extrémités.

8. Unité selon la revendication 7, **caractérisée** par le fait que les moyens d'obturation des extrémités des goulottes sont des éléments de plaque (40) qui présentent une échancrure centrale (41).

9. Unité selon l'une des revendications 1 à 8, **caractérisée** par le fait qu'elle comporte des moyens de centrage et de maintien (30, 31) aptes à coopérer avec des moyens complémentaires (31, 30) d'une unité sous-jacente au moment de l'empilage.

10. Unité selon l'une des revendications 1 à 9, **caractérisée** par le fait qu'elle comporte des organes de connexion fluidique (8, 9) aptes à coopérer avec des organes complémentaires (9, 8) d'une unité sous-jacente au moment de l'empilage afin d'assurer automatiquement, et de manière étanche, la mise en communication des deux caissons superposés (1, 1').

11. Installation de moulage et de traitement thermique de produits alimentaires, notamment pour la cuisson de produits de charcuterie du genre saucissons ou mortadelles, **caractérisée** par le fait qu'elle comporte plusieurs unités (1) empilées conforme à l'une des revendications 1 à 10, et qu'elle est équipée d'une source (7) d'alimentation en fluide caloporteur et de moyens d'évacuation (7') de ce fluide, sur lesquels chaque unité (1) est branchée.

12. Installation selon la revendication 11, **caractérisée** par le fait que le fluide consiste en un liquide chaud permettant de cuire lesdits produits alimentaires.

13. Installation selon la revendication 11, **caractérisée** par le fait que le fluide consiste en un liquide froid permettant de refroidir ou de congeler lesdits produits alimentaires.

## Patentansprüche

1. Einheit zur Formung und Wärmebehandlung von Nahrungsmitteln mit länglicher Form (5), welche eine Anordnung von parallel zueinander liegenden Rutschen (2) aufweist, die dafür geeignet sind, die zu behandelnden Produkte aufzunehmen, **dadurch gekennzeichnet**, daß sie aus einem dichten, flachen Behälter (1) mit wärmeleitender Wand besteht, in dessen Innerem es möglich ist eine Flüssigkeit zur Wärmeübertragung zirkulieren zu lassen, wobei dieser Behälter (1) zwei große horizontale Flächen besitzt, in denen jeweils eine Reihe von Rutschen (2A, 2B) ausgehöhlt sind, die derart ausgebildet und angeordnet sind, daß wenn zwei Einheiten (1, 1') übereinander angeordnet werden, die Rutschen (2'B) der unteren Fläche der einen Einheit mit den Rutschen (2A) der oberen Fläche der anderen Einheit korrespondieren, um Kanäle mit geschlossenem Umriß auszubilden, in denen die Behandlung der Produkte (5) stattfinden kann.

2. Einheit gemäß Anspruch 1, **dadurch gekennzeichnet**, daß die Breite der Rutschen auf der Höhe ihrer Mündung am größten ist.

3. Einheit gemäß Anspruch 1 oder 2, **dadurch gekennzeichnet**, daß die Querschnitte der Gesamtheit der Rutschen (2) identisch sind.

4. Einheit gemäß einem der Ansprüche 1 bis 3, **dadurch gekennzeichnet**, daß die Rutschen (2) einen praktisch halbkreisförmigen oder halbelliptischen Querschnitt aufweisen.

5. Einheit gemäß einem der Ansprüche 1 bis 4, **dadurch gekennzeichnet**, daß die Rutschen (2A) der oberen Fläche bezüglich der Rutschen (2B) der unteren Fläche gemäß einer Fünfpunktanordnung versetzt angeordnet sind.

6. Einheit gemäß einem der Ansprüche 1 bis 5, **dadurch gekennzeichnet**, daß das Innere des Behälters (1) von Wandelementen (15) unterteilt ist, welche eine zickzackartige Bahn der wärmeleitenden Flüssigkeit sicherstellen.

7. Einheit gemäß einem der Ansprüche 1 bis 6, **dadurch gekennzeichnet**, daß die Rutschen (2) an ihren Enden verschlossen sind.

8. Einheit gemäß Anspruch 7, **dadurch gekennzeichnet**, daß die Verschlußvorrichtungen für die Rutschen Plattenelemente (40) sind, welche einen mittleren bogenförmigen Ausschnitt (41) aufweisen.

9. Einheit gemäß einem der Ansprüche 1 bis 8, **dadurch gekennzeichnet**, daß sie Zentrier- und Haltevorrichtungen (30, 31) aufweist, welche dafür geeignet sind, mit komplementären Vorrichtungen (31, 30) einer darunter liegenden Einheit zum Zeitpunkt der Aufstapelung zusammenzuwirken.

10. Einheit gemäß einem der Ansprüche 1 bis 9, **dadurch gekennzeichnet**, daß sie Organe zur Fließverbindung (8, 9) aufweist, welche dafür geeignet sind, mit komplementären Organen (9, 8) einer darunter liegenden Einheit zum Zeitpunkt der Aufstapelung zusammenzuwirken, um automatisch und in dichter Weise die Herstellung der Verbindung zwischen den beiden übereinander angeordneten Behältern (1, 1') sicherzustellen.

11. Anlage zur Formung und Wärmebehandlung von Nahrungsmitteln, insbesondere zum Kochen von Fleisch- und Wurstwaren, der Art Würste oder Mortadella, **dadurch gekennzeichnet**, daß sie mehrere aufeinander gestapelte Einheiten (1) gemäß einem der Ansprüche 1 bis 10 aufweist, und daß sie mit einer Versorgungsquelle für die wärmeübertragende Flüssigkeit und Vorrichtungen zum Entsorgen (7') dieser Flüssigkeit ausgestattet ist, an welche jede Einheit (1) angeschlossen ist.

12. Anlage gemäß Anspruch 11, **dadurch gekennzeichnet**, daß die Flüssigkeit aus einer warmen Flüssigkeit besteht, die ermöglicht die Nahrungsmittel zu kochen.

13. Anlage gemäß Anspruch 11, **dadurch gekennzeichnet**, daß die Flüssigkeit aus einer kalten Flüssigkeit besteht, die ermöglicht die Nahrungsmittel zu kühlen oder einzufrieren.

## Claims

1. A unit for molding and thermal treating food products (5) of elongate shape, the unit comprising a set of parallel troughs (2) suitable for receiving the products to be treated, and being **characterized** by the fact that it comprises a leakproof flat box (1) with a heat conducting wall, inside which it is possible to circulate a heat-conveying fluid, the box (1) possessing two large faces that are horizontal and each having formed therein a series of troughs (2A, 2B) that are shaped and disposed in such a manner that when two units (1, 1') are superposed, the troughs (2'B) in the bottom face of one of them come into correspondence with the troughs (2A) in the top face of the other so as to constitute closed-outline channels in which the products (5) can be treated.

2. A unit according to claim 1, **characterized** by the fact that the troughs are of maximum width in the vicinity of their open sides.

3. A unit according to claim 1 or claim 2, **characterized** by the fact that the sections of all of the troughs (2) are identical.

4. A unit according to any one of claims 1 to 3, **characterized** by the fact that the troughs (2) are of substantially semicircular or semi-elliptical section.

5. A unit according to any one of claims 1 to 4, **characterized** by the fact that the troughs (2A) of the top face are offset relative to the troughs (2B) of the bottom face in a staggered configuration.

6. A unit according to any one of claims 1 to 5, **characterized** by the fact that the inside of the box (1) is partitioned by wall elements (15) which cause the heat-conveying fluid to follow a zigzag path.

7. A unit according to any one of claims 1 to 6, **characterized** by the fact that the troughs (2) are closed at their ends.

8. A unit coring to claim 7, **characterized** by the fact that the means for closing the ends of the troughs are plate elements (40) each presenting a central notch (41).

9. A unit according to any one of claims 1 to 8, **characterized** by the fact that it includes centering and holding means (30, 31) suitable for co-operating with complementary means (31, 30) of an underlying unit when the units are stacked.

10. A unit according to any one of claims 1 to 9, **characterized** by the fact that it includes fluid connection members (8, 9) suitable for co-operating with complementary members (9, 8) of an underlying unit when the units are stacked so as to ensure that two superposed boxes (1, 1') are put into communication automatically and in leakproof manner.

11. An installation for molding and thermal treating food products, in particular for cooking pig-meat products of the sausage or mortadella type, the installation being **characterized** by the facts that it comprises a plurality of stacked units (1) according to any one of claims 1 to 10, and that it is fitted with a source (7) for feeding it with a heat-conveying fluid and with means (7') for evacuating said fluid, each of said units (1) being connected thereto.

12. An installation according to claim 11, **characterized** by the fact that a fluid consists in a hot liquid for cooking said food products.

13. An installation according to claim 11, **characterized** by the fact that the fluid consists in a cold liquid for cooling or freezing said food products.
